# EUROPEAN PATENT SPECIFICATION

(11) **EP 4 056 247 B1**
(45) Date of publication and mention of the grant of the patent: **02.12.2026**
(21) Application number: 20885760.7
(22) Date of filing: 27.10.2020
(51) Int. Cl.: B01D 3/30, B01D 3/34, B01D 3/38

(54) **DISTILLATION APPARATUS**
DESTILLATIONSVORRICHTUNG
APPAREIL DE DISTILLATION

(30) Priority: 05.11.2019 KR 20190140316
(43) Date of publication of application: 14.09.2022
(73) Proprietor: Hanwha Solutions Corporation, Jung-gu Seoul 04541 (KR)
(72) Inventor: AHAN, Wooyoul, Daejeon 34128 (KR); LEE, Shinbeom, Daejeon 34128 (KR); LIM, Dongwook, Daejeon 34128 (KR); JEON, Hyojin, Daejeon 34128 (KR); HAN, Keedo, Daejeon 34128 (KR)
(74) Representative: Kraus & Lederer PartGmbB
(86) International application number: PCT/KR2020/014733
(87) International publication number: WO 2021/091147

(56) References cited:
- EP-A1- 0 078 332
- EP-A2- 0 191 625
- BE-A- 452 417
- CN-A- 105 251 227
- CN-A- 109 046 112
- KR-A- 20120 114 848
- KR-A- 20150 010 635
- KR-A- 20150 034 882
- KR-A- 20180 075 814
- US-A- 2 606 146
- US-A- 4 995 945
- US-A1- 2014 107 302

## Description

### CROSS-REFERENCE TO RELATED APPLICATIONS

This application claims priority under 35 U.S.C. §119 to Korean Patent Application No. 10-2019-0140316, filed on November 05, 2019, in the Korean Intellectual Property Office.

### TECHNICAL FIELD

The following disclosure relates to a distillation apparatus, and more particularly, to a distillation apparatus of recovering a high-purity product through separation of a volatile component from a distillation target material using thermal energy and a centrifugal force.

### BACKGROUND

A stripping column is a device capable of recovering a high-purity product by evaporating a volatile component from a liquid-phase distillation target material using a vapor (gas or steam) in a multi-stage distillation column.

In this case, the stripping column requires high-temperature thermal energy in order to recover the high-purity product from the distillation target material, and thus has a problem that it is difficult to separate and recover the high-purity product in foods or polymers vulnerable to heat.

A spinning cone column (SSC) uses mechanical energy of a centrifugal force together with the thermal energy, and Japanese Patent Laid-Open Publication No. 1995-022646 has been disclosed as Related Art Document related to the SCC.

The SSC recovers a high-purity product from a distillation target material using mechanical energy of a centrifugal force through the distillation target material introduced from an upper portion and a vapor (steam) flowing from a lower portion, and thus, a contact time between the distillation target material and thermal energy is short, such that the SSC may recover the high-purity product at a lower temperature than the stripping column.

Meanwhile, when a stripping target material is in the form of polyvinyl chloride (PVC) slurry or latex, thermal or kinetic energy generates foam, such that the material flows back to a rear-end process. Therefore, the SSC is designed in a form in which an interval (Pc/2) between a fixed cone (FC) and a spinning cone (SC) is wide. As a result, a vapor stream flowing upward becomes not smooth, and when a scale is generated at a lower portion of the fixed cone, it becomes difficult to remove the scale at a narrow and deep portion of the fixed cone. Another distillation apparatus is disclosed in BE452417A.

### SUMMARY

An embodiment of the present invention is directed to providing a distillation apparatus capable of increasing a velocity of a vapor stream flowing upward and decreasing an area in which a scale may be generated.

In one general aspect, a distillation apparatus of the invention is defined in claim 1.

Here, the angle A may be 90° or more and less than 180°.

Alternatively, the angle C may be 135° or more and 150° or less.

In addition, the angle B is 90° or more and less than 180°.

Alternatively, the angle B may be 90°.

Additionally, a pin may be provided on a lower surface of the spinning cone and extending from an upper tip of the lower surface of the spinning cone to a lower tip of the lower surface.

### BRIEF DESCRIPTION OF THE DRAWINGS

FIG. 1 is a view illustrating a distillation apparatus according to an embodiment of the present invention.
FIG. 2 is a view illustrating a conventional distillation apparatus.
FIG. 3 is a view illustrating a distillation apparatus according to another embodiment of the present invention.

### DETAILED DESCRIPTION OF EMBODIMENTS

Hereinafter, a distillation apparatus according to the present invention will be described in detail with reference to the accompanying drawings. The accompanying drawings are provided only by way of example.

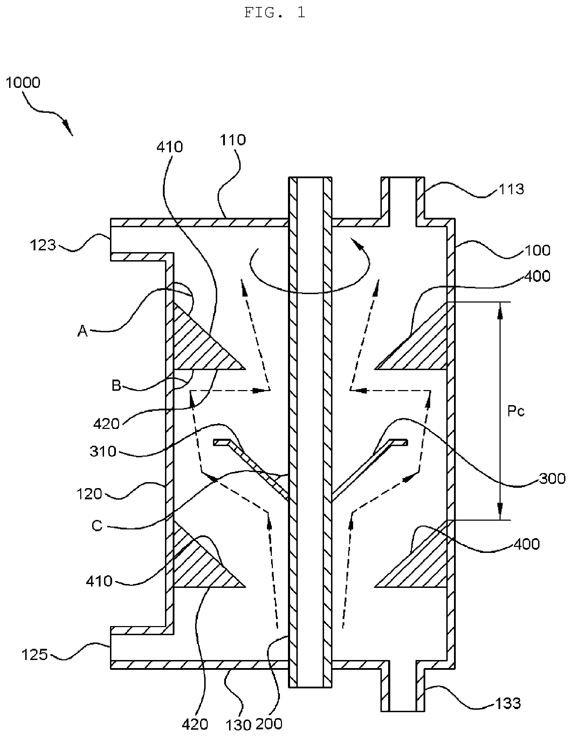

FIG. 1 is a view illustrating a distillation apparatus according to an embodiment of the present invention.

Referring to FIG. 1, the distillation apparatus 1000 according to an embodiment of the present invention includes a body part 100, a spinning shaft 200, a spinning cone 300, and a fixed cone 400.

The body part 100 is a component accommodating the spinning shaft 200, the spinning cone 300, and the fixed cone 400, and a distillation target material is introduced from an upper portion of the body part 100, and a vapor (gas or steam) is introduced from a lower portion of the body part 100.

More specifically, the body part 100 includes an upper plate 110, a side plate 120, and a lower plate 130. Here, the side plate 120 is a structure connecting the upper plate 110 and the lower plate 130 to each other while being formed in a tubular shape.

The body part 100 includes a distillation target material introduction part 123 which is provided at an upper side of the side plate 120 so that the distillation target material may be introduced from the upper portion and moved downward by gravity and through which the distillation target material is introduced. In addition, the body part 100 includes a vapor introduction part 125 which is provided at a lower side of the side plate 120 so that the vapor may rise upward from a bottom in an opposite direction to an introduction direction of the distillation target material and through which the vapor is introduced.

In addition, a vapor discharge part 113 is provided at one side of the upper plate 110 so that a remaining vapor may be discharged to the outside, and a recovery part 133 for recovering a high-purity product in which a volatile material is separated from the distillation target material is provided at one side of the lower plate 130.

However, since the distillation target material introduction part 123, the vapor introduction part 125, the vapor discharge part 113, and the recovery part 133 may be variously disposed so as to meet their functional purposes, they are not limited to the above-described disposition structures or the illustrated numbers.

The spinning shaft 200 is disposed in a vertical direction inside the body part 100, and may axially spin.

In this case, although not illustrated in FIG. 1, a spinning shaft control unit for supplying spinning power to the spinning shaft 200 may be provided in the body part 100.

Meanwhile, the spinning cone 300 is a component provided on an outer surface of the spinning shaft 200.

More specifically, the spinning cone 300 includes an upper surface 310 and a lower surface 320, is formed in a conical shape along a circumference of the outer surface of the spinning shaft 200, and has a shape in which a diameter thereof increases toward an upper tip of the spinning cone 300 (i.e., in an upward direction of the body part 100). A plurality of spinning cones 300 may be provided, may spin together with the spinning shaft 200 around the spinning shaft 200, and may have a spinning speed of 30 rpm to 1000 rpm.

In this case, when an angle formed by the upper surface 310 of the spinning cone 300 with respect to the outer surface of the spinning shaft 200 as illustrated in FIG. 1 is C, the angle C may be 30° or more and 90° or less. Preferably, the angle C may be 45° or more and 60° or less. Here, the outer surface of the spinning shaft 200 refers to an outer surface of a side surface of the spinning shaft 200.

Next, the fixed cone 400 is a component provided on an inner surface of the body part 100, includes an upper surface 410 and a lower surface 420, and is formed in a conical shape along a circumference of the inner surface of the body part 100.

More specifically, a plurality of fixed cones 400 may be provided along a circumference of an inner surface of the side plate 120 of the body part 100. The fixed cone 400 has a shape in which a diameter thereof increases toward an upper tip of the fixed cone 400 (i.e., in the upward direction of the body part 100), similar to the spinning cone 300, and is a component fixed to the inner surface of the side plate 120 without spinning.

Meanwhile, the fixed cones 400 are disposed to be spaced apart from the spinning cone 300 by a predetermined distance. More specifically, one fixed cone 400 is disposed above the upper surface 310 of the spinning cone 300 so as to be spaced apart from the spinning cone 300 by a predetermined distance, and another fixed cone 400 is disposed below the upper surface 310 of the spinning cone 300 so as to be spaced apart from the spinning cone 300 by a predetermined distance. That is, the fixed cones 400 and the spinning cones 300 are alternately arranged in the vertical direction.

Here, the fixed cone 400 serves to guide the distillation target material falling from the upper surface 310 of the spinning cone 300 disposed above the fixed cone 400 to the upper surface 310 of the spinning cone 300 disposed below the fixed cone 400. In this case, the upper surface 410 of the fixed cone 400 has a slope toward the lower portion of the body part 100, and since the upper surface 410 of the fixed cone 400 has such a slope, the distillation target material falling from the spinning cone 300 above the fixed cone 400 may move to the spinning cone 300 below the fixed cone 400 along the slope of the fixed cone 400.

In addition, as illustrated in FIG. 1, in the distillation apparatus 1000 according to the present invention, when an angle formed by the inner surface of the body part 100 and the upper surface 410 of the fixed cone 400 is A and an angle formed by the inner surface of the body part 100 and the lower surface 420 of the fixed cone 400 is B, the sum of the angle A and the angle B is greater than 180°.

More specifically, the angle A is an angle formed by the upper surface 410 of the fixed cone 400 with respect to the inner surface of the side plate 120, and may be 90° or more and less than 180°. Preferably, the angle A may be 135° or more and 150° or less. In addition, the angle B is an angle formed by the lower surface 420 of the fixed cone 400 with respect to the inner surface of the side plate 120, and is 90° or more and less than 180°. Preferably, the angle B may be 90°.

Meanwhile, a distillation process using the distillation apparatus according to an embodiment of the present invention is performed as follows.

When the distillation target material is introduced from the distillation target material introduction part 123, the distillation target material falls to the spinning cone 300. In this case, since the spinning cone 300 is spinning, the distillation target material is spread to an edge distant from the spinning shaft 200 along the upper surface 310 of the spinning cone 300 by a centrifugal force. The distillation target material spread by the centrifugal force falls to the fixed cone 400 disposed below the spinning cone 300, slides and moves along the slope of the upper surface 410 of the fixed cone 400, and then falls to the spinning cone 300 disposed below the fixed cone 400. In this process, the distillation target material reacts with the vapor introduced from the vapor introduction part 125 and rising, such that a volatile material is separated, moved to the lowermost tip of the body part 100, and recovered by the recovery part 133.

As described above, when the distillation target material is in the form of polyvinyl chloride (PVC) slurry or latex in the above-described process, foam is generated by thermal energy or kinetic energy by spinning, such that the material may flow back to a rear-end process. Accordingly, the distillation apparatus is designed in a form in which an interval (Pc/2) between the fixed cone 400 and the spinning cone 300 is wide. In this case, an interval Pc between the fixed cones 400 has a ratio of 0.02 to 4, and preferably a ratio of 0.5 to 3, with respect to the diameter of the body part 100.

When the interval Pc between the fixed cones 400 becomes wide as described above, a vapor stream flowing upward does not become smooth, such that a scale may be generated at a corner portion where the lower surface 420 of the fixed cone 400 and the body part 100 are coupled to each other, and such a corner portion has a narrow and deep v-shaped valley shape, such that there is a problem that it is difficult to remove the generated scale.

In this case, the corner portion having the narrow and deep shape is called a dead volume or dead zone.

In the distillation apparatus according to an embodiment of the present invention, in order to remove such a dead zone, it is essential that the angle B between the inner surface of the body part 100 and the lower surface 420 of the fixed cone 400 is 90° or more and less than 180°.

By making the angle B 90° or more, the lower surface 420 of the fixed cone 400 is orthogonal to the inner surface of the body part 100 to have a flat shape or the lower surface 420 of the fixed cone 400 has a slope toward the upper portion of the body part 100. That is, the dead zone having the v-shaped valley shape is removed. In addition, as the dead zone is removed, there is an effect that an area in which the scale may be generated is decreased.

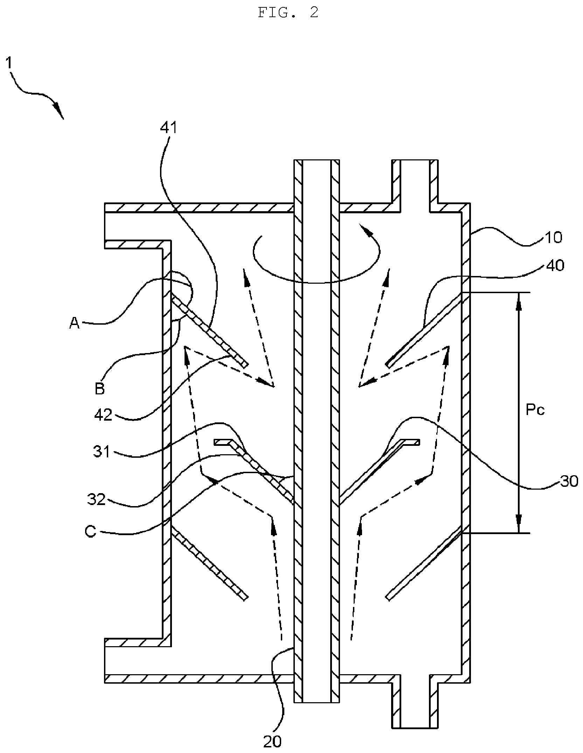

FIG. 2 is a view illustrating a conventional distillation apparatus.

The conventional distillation apparatus 1 includes a body part 10, a spinning shaft 20, a spinning cone 30, and a fixed cone 40.

Referring to FIG. 2, in the conventional distillation apparatus 1, both of an upper surface 41 and a lower surface 42 of the fixed cone 40 extend with a slope toward a lower portion of the body part 10. Accordingly, the fixed cone 40 has a constant thickness from one side thereof in contact with an inner surface of the body part 10 to the other side thereof extending toward the lower portion of the body part 10.

That is, as illustrated in FIG. 2, the sum of an angle A formed by the upper surface 41 of the fixed cone 40 with respect to a side plate of the body part 10 and an angle B formed by the lower surface 42 of the fixed cone 40 with respect to the side plate of the body part 10 is 180°.

In addition, referring to FIG. 2, it can be seen that a dead zone having a narrow and deep v-shaped valley shape is formed at a portion where the inner surface of the body part 10 and the lower surface 42 of the fixed cone 40 are in contact with each other (portion marked by the angle B in FIG. 2). As described above, in such a dead zone, there are a problem that a possibility that a scale will be generated is high and a problem that it is difficult to remove the generated scale due to a narrow space of the dead zone.

Hereinafter, test results for demonstrating effects of the distillation apparatus according to the present invention described above with reference to FIGS. 1 and 2 and Table 1 will be described.

Comparative Example 1 is the conventional distillation apparatus 1 as illustrated in FIG. 2.

An inner diameter of the body part 10 for a test in Comparative Example 1 is 0.15 m, and a length of the fixed cone 40 is 0.04 m. In Comparative Example 1, as described above, the sum of the angle A formed by the upper surface 41 of the fixed cone 40 with respect to the side plate of the body part 10 and the angle B formed by the lower surface 42 of the fixed cone 40 with respect to the side plate of the body part 10 is 180°, and as illustrated in FIG. 2, the dead zone having the v-shaped valley shape is formed at the portion where the inner surface of the body part 10 and the lower surface 42 of the fixed cone 40 are in contact with each other.

In addition, a polyvinyl chloride (PVC) paste resin flows in the form of latex (solid contents: 45wt%) at an upper portion of the body part 10, and a vapor of 120°C is injected at 0.03 m³/hr at a lower portion of the body part 10 and rises to the upper portion of the body part 10 together with the residual vinyl chloride monomer (VCM) included in the latex. The spinning cone 30 spins at 120 rpm, and an interval Pc between the fixed cones 40 is 1.2 m.

Example 1 is the distillation apparatus 1000 as illustrated in FIG. 1.

In Example 1, the angle B by the inner surface of the body part 100 and the lower surface 420 of the fixed cone 400 is 90°. That is, since the lower surface 420 of the fixed cone 400 has a flat and round disk shape without an inclination when viewed from below, a dead zone, which is a deep gap having the v-shaped valley shape as in Comparative Example 1, does not exist. Example 1 is operated under the same conditions as Comparative Example 1 except for the angle B.

Table 1 shows test results for Comparative Example 1 and Example 1 described above.

In the test results, in a scale generation possible area (m²), only areas in which a scale may be generated between the fixed cone 400 and the inner surface of the body part 100 are calculated and compared with each other.

**[Table 1]**

| 120 rpm | Stream Velocity (m/sec) in Fixed Cone | Stream Velocity (m/sec) in Spinning Cone | Stream Velocity (m/sec) in Inner Surface (Shell Wall) of Body Part | Scale Generation Possible Area (m²) |
|---|---|---|---|---|
| Comparative Example 1 | 0.7 | 1.65 | 0.95 | 7.5 |
| Example 1 | 0.75 | 1.9 | 1 | 5.1 |

In this case, referring to the test results in Table 1, in Comparative Example 1, a stream velocity at a place where a liquid flow exists in the fixed cone 40 is 0.7 m/sec, a stream velocity at a place where a liquid flow exists in the spinning cone 30 is 1.65 m/sec, and a stream velocity at a place where a liquid flow exists on the inner surface of the body part 10 is 0.95 m/sec.

In addition, referring to the test results in Table 1, in Example 1, a stream velocity at a place where a liquid flow exists in the fixed cone 400 is 0.75 m/sec, a stream velocity at a place where a liquid flow exists in the spinning cone 300 is 1.9 m/sec, and a stream velocity at a place where a liquid flow exists on the inner surface of the body part 100 is 1 m/sec.

Analyzing the test results in Table 1, it can be seen that in Example 1, the stream velocity in the spinning cone 300 is increased by 1.15 times as compared with Comparative Example 1. An increase in the stream velocity means that transfer efficiency of the distillation target material is higher than that of Comparative Example 1.

In addition, in Example 1, a shape of a place where a scale may be generated was a flat shape rather than a narrow and deep v-shaped valley shape as in Comparative Example 1, and it can be seen that the scale generation possible area is decreased to 68% of that of Comparative Example 1 due to such a shape. Accordingly, there is an effect that a cleaning time required for removing the scale may be shortened.

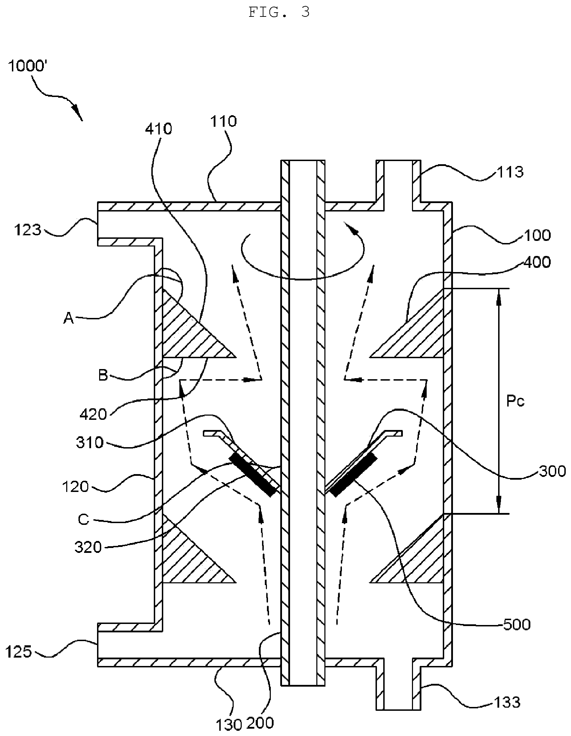

FIG. 3 is a view illustrating a distillation apparatus 1000' according to another embodiment of the present invention.

Referring to FIG. 3, the distillation apparatus according to another embodiment of the present invention includes a body part 100, a spinning shaft 200, a spinning cone 300, a fixed cone 400, and a pin 500.

Here, the body part 100, the spinning shaft 200, the spinning cone 300, and the fixed cone 400 are the same as those of the distillation apparatus 1000 according to an embodiment of the present invention, and a detailed description thereof will thus be omitted.

The pin 500 is provided on the lower surface 320 of the spinning cone 300 and extends from an upper tip of the lower surface 320 of the spinning cone to a lower tip of the lower surface 320, as illustrated in FIG. 3. Here, the pin 500 is disposed perpendicular to the lower surface 320 of the spinning cone 300. A plurality of pins 500 may be provided, and the number, a disposition interval, and the like, of the pins 500 may be appropriately adjusted according to a function.

In this case, the pin 500 may spin together with the spinning cone 300 to increase a rising stream velocity of the vapor flowing from the lower portion of the body part 100, and accordingly, promote separation of a volatile component included in the distillation target material, and increase a residing time of the distillation target material, thereby increasing separation efficiency of the volatile component in the distillation target material.

The distillation apparatus 1000' according to another embodiment of the present invention is the same as the distillation apparatus 1000 according to an embodiment of the present invention except that it further includes the pin 500, and a detailed description thereof will thus be replaced by a description of the distillation apparatus 1000 according to an embodiment described above.

As described above, in the distillation apparatus according to the present invention, the dead zone is removed by changing the angle formed by the lower surface of the fixed cone and the inner surface of the body part, such that a velocity of the vapor stream flowing upward may be increased, the area in which the scale may be generated may be decreased, and a scale removal time may be shortened, and thus, maintenance of the distillation apparatus may be efficiently performed.

The distillation apparatus according to the present invention may increase the velocity of the vapor stream flowing upward by changing the angle formed by the lower surface of the fixed cone and the inner surface of the body part.

In addition, the distillation apparatus according to the present invention may decrease the area in which the scale may be generated by changing the angle formed by the lower surface of the fixed cone and the inner surface of the body part.

In addition, the distillation apparatus according to the present invention may shorten the scale removal time by changing the angle formed by the lower surface of the fixed cone and the inner surface of the body part to simply change a form of a portion where the scale may be generated, and thus, the maintenance of the distillation apparatus may be efficiently performed.

## Claims

1. A distillation apparatus comprising:
a body part having an upper portion from which a distillation target material is introduced and a lower portion from which a vapor is introduced;
a spinning shaft spinning inside the body part;
a spinning cone provided on an outer surface of the spinning shaft; and
a fixed cone provided on an inner surface of the body part and disposed to be spaced apart from the spinning cone by a predetermined distance,
wherein A + B > 180° in which A is an angle formed by the inner surface of the body part and an upper surface of the fixed cone, and B is an angle formed by the inner surface of the body part and a lower surface of the fixed cone,
the angle B is 90° or more and less than 180°, and
a plurality of fixed cones is provided along the circumference of the inner surface of the side plate of the body part,
**characterized in that**, the interval between the fixed cones has a ratio of 0.02 to 4 with respect to the diameter of the body part.

2. The distillation apparatus of claim 1, wherein the apparatus further comprises a pin provided on a lower surface of the spinning cone and extending from an upper tip of the lower surface of the spinning cone to a lower tip of the lower surface.

3. The distillation apparatus of claim 1 or 2, wherein the angle A is 90° or more and less than 180°.

4. The distillation apparatus of claim 1 or 2, wherein the angle A is 135° or more and less than 150°.

6. The distillation apparatus of claim 1 or 2, wherein the angle B is 90°.

## Patentansprüche

1. Destillationsvorrichtung, umfassend:
einen Grundkörper mit einem oberen Abschnitt, über den ein zu destillierendes Material eingebracht wird, und einem unteren Abschnitt, über den ein Dampf eingebracht wird;
eine rotierende Welle, die im Inneren des Grundkörpers rotiert;
einen rotierenden Kegel, der an einer Außenfläche der rotierenden Welle vorgesehen ist; und
einen feststehenden Kegel, der an einer Innenfläche des Grundkörpers vorgesehen und so angeordnet ist, dass er von dem rotierenden Kegel um einen vorbestimmten Abstand beabstandet ist,
wobei A + B > 180° ist, wobei A ein Winkel ist, der durch die Innenfläche des Grundkörpers und eine obere Fläche des feststehenden Kegels gebildet wird, und B ein Winkel ist, der durch die Innenfläche des Grundkörpers und eine untere Fläche des feststehenden Kegels gebildet wird,
der Winkel B 90° oder mehr und weniger als 180° beträgt, und
eine Mehrzahl von feststehenden Kegeln entlang des Umfangs der Innenfläche der Seitenplatte des Grundkörpers vorgesehen ist,
**dadurch gekennzeichnet, dass** der Abstand zwischen den feststehenden Kegeln ein Verhältnis von 0,02 bis 4 in Bezug auf den Durchmesser des Grundkörpers aufweist.

2. Destillationsvorrichtung nach Anspruch 1, wobei die Vorrichtung ferner einen Stift umfasst, der an einer unteren Fläche des rotierenden Kegels vorgesehen ist und sich von einem oberen Ende der unteren Fläche des rotierenden Kegels zu einem unteren Ende der unteren Fläche erstreckt.

3. Destillationsvorrichtung nach Anspruch 1 oder 2, wobei der Winkel A 90° oder mehr und weniger als 180° beträgt.

4. Destillationsvorrichtung nach Anspruch 1 oder 2, wobei der Winkel A 135° oder mehr und weniger als 150° beträgt.

6. Destillationsvorrichtung nach Anspruch 1 oder 2, wobei der Winkel B 90° beträgt.

## Revendications

1. Appareil de distillation comprenant :
une partie de corps ayant une partie supérieure par laquelle un matériau à distiller est introduit et une partie inférieure par laquelle une vapeur est introduite ;
un arbre rotatif tournant à l'intérieur de la partie de corps ;
un cône rotatif prévu sur une surface externe de l'arbre rotatif ; et
un cône fixe prévu sur une surface interne de la partie de corps et disposé de manière à être espacé du cône rotatif d'une distance prédéterminée,
dans lequel A + B > 180°, A étant un angle formé par la surface interne de la partie de corps et une surface supérieure du cône fixe, et B étant un angle formé par la surface interne de la partie de corps et une surface inférieure du cône fixe,
l'angle B étant de 90° ou plus et inférieur à 180°, et
une pluralité de cônes fixes étant prévue le long de la circonférence de la surface interne de la plaque latérale de la partie de corps,
**caractérisé en ce que** l'intervalle entre les cônes fixes présente un rapport de 0,02 à 4 par rapport au diamètre de la partie de corps.

2. Appareil de distillation selon la revendication 1, dans lequel l'appareil comprend en outre une broche prévue sur une surface inférieure du cône rotatif et s'étendant d'une extrémité supérieure de la surface inférieure du cône rotatif à une extrémité inférieure de la surface inférieure.

3. Appareil de distillation selon la revendication 1 ou 2, dans lequel l'angle A est de 90° ou plus et inférieur à 180°.

4. Appareil de distillation selon la revendication 1 ou 2, dans lequel l'angle A est de 135° ou plus et inférieur à 150°.

6. Appareil de distillation selon la revendication 1 ou 2, dans lequel l'angle B est de 90°.
